# EUROPEAN PATENT APPLICATION

(11) **EP 3 093 114 A2**
(43) Date of publication of application: **16.11.2016**
(21) Application number: 16001075.7
(22) Date of filing: 12.05.2016
(51) Int. Cl.: B29C 41/04, B29C 70/32, B29D 99/00, B29C 70/86, B33Y 30/00

(54) **METHOD FOR THE MANUFACTURE OF A BLADE OR BLADE SECTION FOR A WIND TURBINE AND A BLADE OR BLADE SECTION THEREBY OBTAINED**

(30) Priority: 13.05.2015 IT TO20150248
(71) Applicant: ROTOBY Sp. z o.o., 43-382 Bielsko-Biala (PL)
(72) Inventor: Corrado, Donato, PL- 43-382 Bielsko-Biala (PL); D'Alosio, Gaetano, PL- 43-382 Bielsko-Biala (PL)
(74) Representative: Aprà, Mario

(57) **Abstract**

Method for the manufacture of a blade or blade section for a wind turbine, comprising the following steps:
- providing a mold that can be opened and closed, having an internal cavity with a form corresponding to that of the finished outer surface of a blade or blade section of a wind turbine being manufactured;
- placing in said mold mechanical means for connecting the blade or blade section, when formed, to another mechanical structure;
- loading into said open mold a pre-weighed quantity of a chosen plastic or polymer material, in powder or liquid form;
- closing and rotating said mold, mounted on a respective arm of a rotational molding system, and making the mold rotate around at least one axis;
- heating said rotating mold to a temperature of between 100°C and 450°C, so that said material uniformly reaches all points of the internal cavity of said mold, settling in layers on the inner surfaces of the mold and gradually forming a hollow body with an external form corresponding to that of said blade or blade section of a wind turbine being manufactured, the final thickness of which is pre-determined by the processing time and by the operating temperature reached;
- after a pre-determined time and once the material being processed has layered, subjecting the mold to cooling, while said mold rotation continues to prevent deformations of said hollow body;
- opening the mold, upon completion of the cooling process, in a work station for extracting said hollow body from the mold in a single piece, which has the finished external form of said blade or blade section of a wind turbine, and comprises said co-molded mechanical connecting means inseparably integrated with said hollow body.

## Description

The present invention relates to a method for the manufacture of a blade or blade section for a wind turbine.

The present invention also relates to a blade or blade section for a wind turbine obtained using the above-mentioned method. The use of wind energy, i.e. the conversion of energy deriving from the wind into a corresponding energy that can be used to meet human needs, mainly obtained by means of wind turbine generators (or wind generators), constitutes a widely consolidated and common source of so-called renewable energy, in other words energy that is not exhaustible on a human timescale.

Essentially, wind generator operation is based on the transfer of energy deriving from the wind to a rotor, shaped essentially as a hub to which are connected a plurality of blades (usually numbering three); downstream of said rotor a multiplier device is usually connected, for the purpose of increasing the number of turns made by the hub according to a pre-determined multiplier coefficient, and thereby ensuring the better operation of a generator, which transforms the mechanical energy into electrical energy.

Given the gradual increase in the use of wind energy as a renewable source for the production of electrical energy, research is currently being conducted aimed at obtaining the best manufacturing materials, particularly for wind turbine blades, so as to obtain blades that can better withstand the numerous stresses and abuses encountered during use, and for the manufacture of blades of larger size, without this increase in size compromising the integrity or overall structural strength of the wind generator.

Under prior art, blades for wind turbines are generally made of fiberglass.

As is known, fiberglass is an interwoven cloth fiber impregnated with liquid resinous substances or polyester.

In order to obtain fiberglass, said interwoven cloth fiber impregnated with liquid resinous substances or polyester, appropriately combined with catalysts or accelerants, is then manually applied using brushes and rollers to glass cloths that have previously placed in special open molds: in this way, solidification of the resins encapsulates the glass fibers, thereby creating fiberglass.

Fiberglass, which is obtained by means of an essentially laborious procedure as schematically described above, has appreciable characteristics of lightness and solidity, which enable it to be used also in sectors such as aeronautics, in other words in the manufacture of blades for wind turbines.

In order to provide greater reinforcement for the fiberglass turbine blade thus obtained, it is also common to insert further reinforcements therein, for example made of Kevlar, near the points that are most critical because they are subject to greater stress when in use.

In addition to the above-mentioned manufacturing complexity, said blades for wind turbines made of fiberglass also have further drawbacks.

During use, the rotor blades are greatly subjected to external agents, such as UV rays, hail, sand or lightning, which inevitably cause significant fatigue and wear to the materials, making frequent repairs to the wind turbine system necessary.

However, with reference to said known blades for turbines, said maintenance operations often prove to be inexpedient due to the fact that they require the use of costly, complex techniques, and may also require the wind turbine system to suspend operation for a more or less extended period of time. However, the above-mentioned technology for the production of fiberglass does not permit the manufacture of blades for wind turbines consisting of several hollow bodies in a single piece: the manufacture of said fiberglass blades involves the use of open molds, followed by the subsequent joining of the individual parts.

Prior art is also familiar with wind turbine blades made of sheet metal, in a similar manner, particularly in the case of blades with essentially smaller dimensions, and the use of carbon fiber is also known.

Similar observations can be made with reference to wind turbine blades made, according to known art, of plastic reinforced with fiberglass, which has a high ability to withstand traction and compression.

All the above-mentioned known types of blades for wind turbines do not however consist of various hollow bodies in a single piece.

However, it is known that wind turbine blades are manufactured provided with a structure essentially in the form of an appropriately-coated metallic lattice, making it possible to obtain blades that are substantially simple to assemble and that are characterized by an appreciable level of lightness and strength. Nevertheless, even said turbine blades have the drawback that they require an essentially complex and costly manufacturing procedure.

It will be similarly evident that said known wind turbine blades cannot be manufactured in a single piece, but rather require the separate manufacture of the various components with subsequent assembly by means of welding, with all the resultant drawbacks associated with the presence of weld seams and internal stresses, which make the blades weaker and more prone to wear or damage during use.

Additionally, the manufacture of said known wind turbine blades is particularly complex, especially when it is necessary to obtain large-dimension blades.

Furthermore, with reference to said known wind turbine blades, any fastening means for connecting the blade to another structure (for example: inserts, plates, ring nuts, tubular elements) are necessarily applied to the structure of the blade, and are not encapsulated within it, with the resultant drawbacks in terms of the risk of failure or breakage when in use.

The rotational molding technique is a widely-used procedure known to prior art, used particularly for the manufacture of large-size three-dimensional objects.

Said molding technique can currently be used with a large number of materials, including not only the most common plastic materials, but also more recently introduced polymers, whose improved chemical-physical properties and workability allows them to be used with rotational molding.

By means of the above-mentioned molding procedure, it is possible to obtain finished pieces that are not subject to internal stresses and with a uniform thickness.

Similarly, the above-mentioned technique enables the co-molding of any inserts as part of the same manufacturing process, thereby obtaining a finished product that is already provided with a particular desired surface finish, which therefore does not need to be applied at a later stage.

To implement said procedure, the movement of the mold is along two axes: a primary axis, with a fixed direction, and a secondary axis, with a variable direction; in this way, the material being used (a plastic or polymer material, for example) touches in a homogeneous manner all the inner surfaces of the mold, which when placed in a suitable oven at an appropriate temperature, results in the material melting and adhering to said inner surfaces, covering them uniformly. In this way, by proceeding with subsequent layering of material, the finished piece is obtained.

It will be noted how, with the above-mentioned procedure, since the rotation is quite slow, the material being used does not cover the mold as a result of the centrifugal force generated by the rotation, but rather only because it melts when it comes into contact with the hot walls of the mold. Implementation of the rotational molding procedure essentially involves the following sequential steps, as indicated below:
- loading a pre-weighed quantity of powder of a chosen material to be used, with a fineness of between 60 and 500 µm, into a thin hollow metallic mold, of an appropriate shape and size, that can be easily opened and closed using clamps and/or bolts;
- closing and rotating said mold, mounted on a respective arm of a rotational molding system, with an essentially bi-axial rotation on axes that are substantially perpendicular to one another;
- placing said mold into an oven pre-heated to a temperature of between 240 and 320 °C. In this way, said powder, due to the rotation of the mold, will uniformly coat the inner surfaces of the mold and, when it comes into contact with the hot surface (the temperature of the mold wall is considerably higher than the melting temperature of the material being used), it melts, spreads out and uniformly reaches all parts of the mold cavity, forming a layer on the inner surfaces of the mold and gradually forming the piece, thereby guaranteeing the best reproduction and reproducibility of the item. The final thickness of the item to be obtained is determined by the quantity of powder originally introduced into the mold, and by the amount of time involved and the temperature of the oven;

- extracting the mold from the oven, once the material being used has fully melted, and moving it to a suitable cooling station, where inducted air and/or vapor is used to cool the mold, while said bi-axial rotation continues in order to prevent the piece, which is obviously still hot, from being subject to deformations;
- upon completion of the cooling process, transferring the mold to an unloading station, where the mold is opened for extraction of the three-dimensional object contained therein, which for all intents and purposes has its finished appearance, without the need for further processing steps.

The mold is now ready to begin another working cycle.

It will be noted how items obtained by means of a rotational molding procedure have several different advantageous characteristics, such as, for example, stabilization against UV rays, good dielectric properties, resistance against chemical agents, and a high degree of elasticity, enabling an appreciable dampening of the impact of collisions, a high degree of resistance to corrosion, and the possibility of applying an appreciable external surface finish.

More particularly, rotational molding makes it possible to obtain finished products that are not subject to stress, since they are not forced to assume particular shapes and spatial arrangements (which is the case with injection molding), and do not have any shape memory, thereby avoiding the risk of accidental deformations as a result of more or less prolonged exposure to essentially high environmental temperatures. Furthermore, given the high degree of fluidity of the material being used once it melts, all parts of the mold cavity are easily reached, thereby enabling the easy, optimal manufacture of large items and of more complex shapes, with uniform, controlled thicknesses, thereby also avoiding the risk of defects at the production stage, which could compromise the subsequent operation of the finished product when in use. However, since the object is formed in a single step and with a closed mold, the object itself is created in a simple manner and, once formed, does not have any trace of welding and/or additions, with all that this means in terms of greater solidity.

Additionally, said known rotational molding procedure makes it possible to obtain molded objects with a plurality of layers. The present invention, taking account of the above-mentioned considerations, and starting from the notion of the above-mentioned drawbacks of the prior art cited, intends to provide a solution to these.

An object of the present invention is to provide a method for the manufacture of a blade or blade section for a wind turbine, which will allow a blade or blade section to be obtained by means of a single working process with a closed mold, and without the need for any additional welding or finishing steps.

A further object of the present invention is to provide a method as specified, which makes it possible to obtain a blade or blade section for a wind turbine that has a high degree of resistance against the stresses and abuse encountered when in use.

Yet another object of the present invention is to provide a method as indicated, that makes it possible to obtain a blade or blade section for a wind turbine that is not subject to stresses associated with structural forces, so that it can assume and subsequently maintain particular forms and spatial arrangements, and likewise is not subject to phenomena of unwanted deformation when used in areas with essentially high environmental temperatures.

A further object of the present invention is to provide a method as specified, which allows the simple manufacture of a blade or blade section for a wind turbine, characterized by essentially large dimensions.

Yet another object of the present invention is to provide a method as specified, which allows possible necessary inserts to be integrated into the same manufacturing process of a blade or blade section, thereby obtaining a high level of strength for subsequent secure anchoring to other structures, without the risk of structural yielding when faced with essentially strong stresses.

Another object of the present invention is to provide a blade or blade section for a wind turbine obtained by means of the procedure specified above.

Yet another object of the invention is to provide a blade or blade section for a wind turbine that allows its presence to be indicated at distance.

Yet another object of the invention is to provide a blade or blade section for a wind turbine that can prevent the surface formation of a layer of ice.

Another object of the invention is to provide a blade or blade section for a wind turbine that allows at least one physical quantity associated with the operation of said blade or blade section to be measured.

Yet another object of the invention is to provide a blade or blade section for a wind turbine that allows an electrical current inducted therein by lightning or similar to be discharged to the earth.

In view of such objects, the present invention provides a method for the manufacture of a blade or blade section for a wind turbine, the essential feature whereof is the object of claim 1.

Further advantageous characteristics are described in the dependent claims from 2 to 4.

The subsequent claims from 5 to 11, on the other hand, relate to a blade or blade section for a wind turbine obtained by means of the above-mentioned procedure.

The aforesaid claims are intended as fully incorporated herein.

In particular, according to the present invention, said method for the manufacture of a blade or blade section for a wind turbine, comprises the following steps:
- providing a mold that can be opened and closed, having an internal cavity with a form corresponding to that of the finished outer surface of a blade or blade section of a wind turbine being manufactured;
- placing into said mold mechanical means for connecting the blade or blade section, when formed, to another mechanical structure;
- loading into said open mold a pre-weighed quantity of a chosen plastic or polymer material, in powder or liquid form;
- closing and rotating said mold, mounted on a respective arm of a rotational molding system, and making the mold rotate around at least one axis;
- heating said rotating mold to a temperature of between 100°C and 450°C, so that said material uniformly reaches all points of the internal cavity of said mold, settling in layers on the inner surfaces of the mold and gradually forming a hollow body with an external form corresponding to that of said blade or blade section of a wind turbine being manufactured, the final thickness of which is pre-determined by the processing time and by the operating temperature reached;
- after a pre-determined time and once the material being processed has layered, subjecting the mold to cooling, while said mold rotation continues to prevent deformations of said hollow body;
- opening the mold, upon completion of the cooling process, in a work station for extracting said hollow body from the mold in a single piece, which has the finished external form of said blade or blade section of a wind turbine, and comprises said co-molded mechanical connecting means inseparably integrated with said hollow body.

The present invention will be more apparent from the detailed description below, with reference to the accompanying drawing, showing a blade obtained using an embodiment of the method for manufacturing a wind turbine blade according to the present invention, wherein:
- figure 1 shows a schematic, perspective view of a wind turbine, comprising a plurality of blades manufactured using the method for manufacturing a blade or blade section for a wind turbine according to an embodiment of the present invention;
- figure 2 shows an overhead plan view in a larger scale of the element shown in Figure 1;
- figure 3 shows a perspective view in a larger scale of a blade for the wind turbine shown in figure 1;
- figure 4 shows a perspective view, in a larger scale and in partial cross-section, of a blade for the wind turbine shown in figure 1, wherein said blade is made in a single, hollow body, and has an inner core for structural stiffening;
- figure 5 shows a similar view to that shown in figure 4, but wherein said blade comprises an internal reinforcing lining made of expanded resin;
- figure 6 shows a perspective view, in a larger scale and in partial cross-section, of the blade shown in figure 3, produced in a single hollow body;

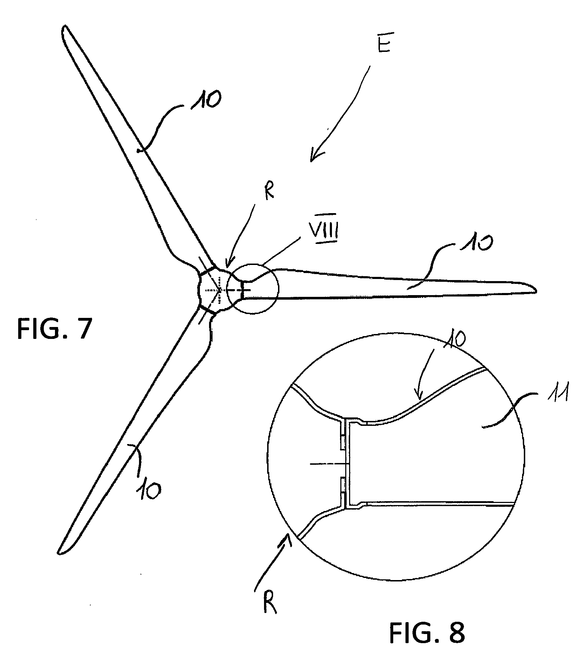

- figure 7 shows a front elevation view, in a larger scale, of the detail of the wind turbine blade shown in figure 1;
- figure 8 shows a view in a larger scale of detail VIII of figure 7;
- figure 9 shows an exploded perspective view, in a larger scale, of a blade and the rotor of the wind turbine shown in figure 1, wherein connecting means inseparably integrated with said blade are visible;
- figure 10 shows a view in a larger scale of detail X of figure 9.

There follows a description of an embodiment of the method for the manufacture of a blade or blade section for a wind turbine, according to the present invention.

Advantageously, according to the present invention, said method comprises the following steps:
- providing a mold that can be opened and closed, having an internal cavity with a form corresponding to that of the finished outer surface of a blade or blade section of a wind turbine being manufactured;
- placing into said mold mechanical means for connecting the blade or blade section, when formed, to another mechanical structure;
- loading into said open mold a pre-weighed quantity of a chosen plastic or polymer material, in powder or liquid form;
- closing and rotating said mold, mounted on a respective arm of a rotational molding system, and making the mold rotate around at least one axis;
- heating said rotating mold to a temperature of between 100°C and 450°C, so that said material uniformly reaches all points of the internal cavity of said mold, settling in layers on the inner surfaces of the mold and gradually forming a hollow body with an external form corresponding to that of said blade or blade section of a wind turbine being manufactured, the final thickness of which is pre-determined by the processing time and by the operational temperature reached;
- after a pre-determined time and once the material being processed has layered, subjecting the mold to cooling, while said mold rotation continues to prevent deformations of said hollow body;
- opening the mold, upon completion of the cooling process, in a work station for extracting said hollow body from the mold in a single piece with the finished external form of said blade or blade section of a wind turbine, and comprises said co-molded mechanical connecting means inseparably integrated with said hollow body.

In this way, it is possible to obtain a mechanical connection between said blade or blade section with another structure (for example, with a rotor of the wind turbine), which will have strong hold characteristics, even in the event of strong stresses when in use.

According to the present embodiment of the invention, said method may also include a step for introducing pre-determined quantities of expandable polymer and of polymer expanding agent into said mold, thereby producing a corresponding expanded resin, which is deposited on said layered material to form an internal reinforcing lining in said blade or blade section.

In this way, further reinforcement of the blade or blade section is provided.

Advantageously, according to the present invention, the above-mentioned step of introducing pre-determined quantities of expandable polymer and of polymer expanding agent into said mold is carried out while said mold is being heated.

In a variant, said step of introducing pre-determined quantities of expandable polymer and of polymer expanding agent into said mold is carried out cold, following extraction of said blade or said blade section from said mold and its insertion into a holding counter-mold.

### Blade or blade section obtained by means of the method according to the invention.

In the above-mentioned drawings, the number 10 is used to indicate in its entirety a wind turbine blade obtained by means of said method of manufacturing a blade 10 or blade section (not illustrated) for a wind turbine T, according to an embodiment of the present invention.

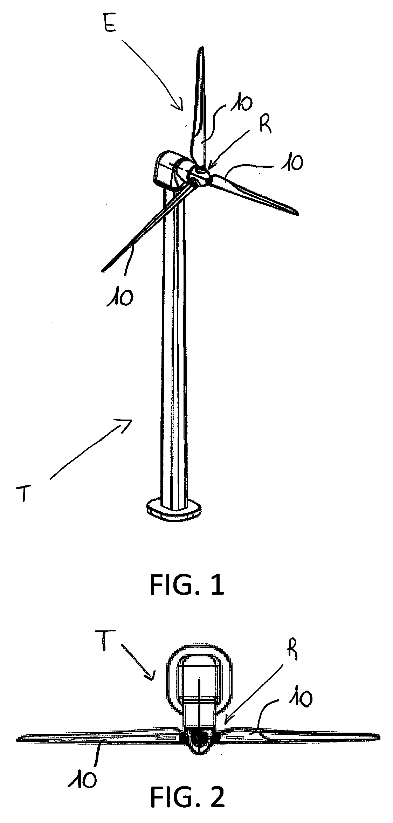

Figure 1 accompanying the present invention illustrates, schematically and in its entirety, a wind turbine comprising an air screw E including three blades 10 spaced at a distance of 120 degrees from one another, and fixed to a rotor R of the turbine T.

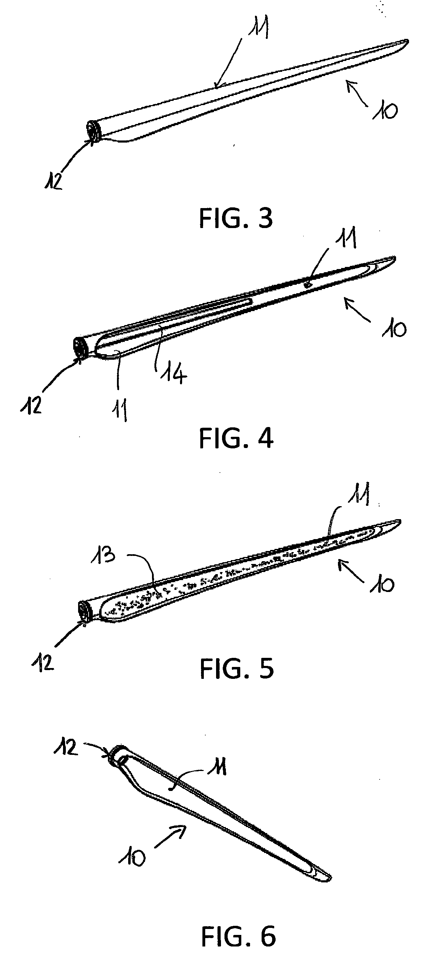

As illustrated, said blade 10 or blade section (figures 1 - 3), obtained by means of the above-described method, comprises a hollow blade or blade section body 11 in a single piece (in particular, see figures 3 to 6).

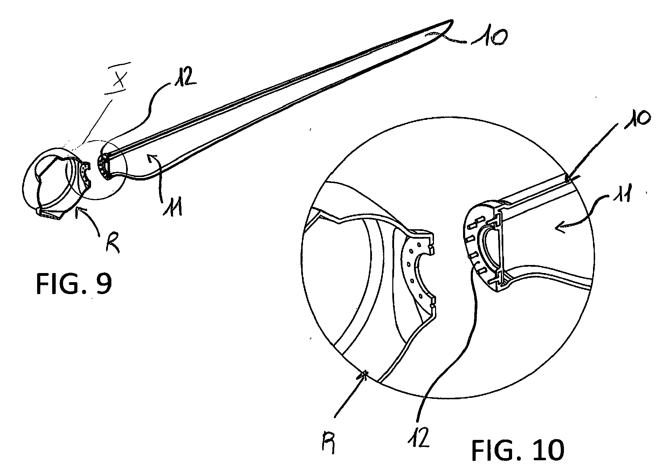

Advantageously, said hollow body 11 of the blade 10 in a single piece comprises inseparably integrated connecting means 12, for example co-molded with the body 11 itself (figures 9 and 10).

This allows a connection to be made to another mechanical structure, for example the rotor R of the wind turbine T, characterized by a high level of strength, even in the event of strong stresses when in use.

In order to further ensure relative structural solidity, said blade 10 or said blade section may comprise an internal reinforcing lining 13 in expanded resin.

An embodiment of a blade 10 for a wind turbine T comprising said interior reinforcing lining 13 is schematically shown in figure 5.

In a variant, for the same purpose, said blade 10 may comprise an inner core 14 for structural stiffening.

An embodiment of a blade 10 for a wind turbine T comprising said inner core 14 is schematically shown in figure 4. According to a variant, said blade or blade section for a wind turbine, is made of transparent or translucent material, and comprises at least one light source on the inside, or encapsulated in said transparent or translucent material.

Said transparent or translucent material may, for example, be a plastic or polymer material, in powder or liquid form, and in any case capable of letting light pass through.

Said at least one light source may comprise at least one LED light, or at least one optic fiber, powered from the mains network or by accumulator batteries.

Said at least one light source is sized and positioned in said blade or blade section so as to make it more visible, when in use, to aircraft in flight that may be passing in the vicinity. The type and intensity of the light source are chosen on the basis of the signal characteristics required. According to another variant, said blade or blade section for a wind turbine T has an anti-icing surface layer. Said surface layer is for example obtained by means of paint, plaster, or a nanomaterial suited for the purpose, in either liquid or solid form.

In another variant, said blade or blade section for a wind turbine comprises heat transfer means co-molded with said hollow body and which, when said blade or blade section is in use, distribute heat along said hollow body, so as to prevent the formation of surface ice, or to melt any surface ice that may have formed.

Said co-molded heat transfer means comprise, for example, electrical resistance elements, in the form of a coil for example, encapsulated into the material thickness of said hollow body.

Furthermore, as a further variant, said blade or blade section for a wind turbine comprises electrical/electronic means for measuring at least one physical quantity, co-molded with said hollow body and which, when said blade or blade section is in use, make it possible to monitor changes over time to said physical quantity, by means of a control system connected thereto. Said physical quantity may be, for example, the rotation speed of the blade.

In another variant, said blade or blade section for a wind turbine comprises electrical/electronic means of discharging lightning or similar, co-molded with said hollow body and connected to earth, and which, when said blade or blade section is in use, allow an electrical charge to be discharged to earth.

As will be evident from the preceding considerations, said method for the manufacture of a blade or blade section for a wind turbine according to the present invention, allows the blade or blade section to be obtained by means of a single working process with a closed mold, and without the need for any additional welding or finishing steps.

Furthermore, said method as specified allows a blade or blade section for a wind turbine to be obtained that has a high degree of resistance against the stresses and abuse encountered when the turbine is in use.

In addition, said method as indicated, allows a blade or blade section for a wind turbine to be obtained that is not subject to stresses associated with structural forces, so that it can assume and subsequently maintain particular forms and spatial arrangements, and likewise is not subject to phenomena of unwanted deformation when used in areas with essentially high environmental temperatures.

Furthermore, said method as described allows the simple manufacture of a blade or blade section for a wind turbine, characterized by essentially large dimensions.

In addition, said method as specified, allows possible necessary inserts to be integrated into the same manufacturing process of a blade or blade section, thereby obtaining a high level of strength for subsequent secure anchoring to other structures, without the risk of structural yielding when faced with essentially strong stresses.

Furthermore, the present invention provides a blade or blade section for a wind turbine obtained by means of the above-specified procedure, with the above-listed characteristics. Also, said blade or blade section for a wind turbine allows its presence to be indicated at distance.

Furthermore, said or blade section for a wind turbine can prevent the surface formation of a layer of ice.

In addition, said or blade section for a wind turbine allows at least one physical quantity associated with the operation of said blade or blade section to be measured.

Also, said or blade section for a wind turbine allows an electrical current inducted therein by lightning or similar to be discharged to the earth.

As it appears from the above description, the present invention allows the objects described in the introduction to be achieved in a simple and advantageous manner.

## Claims

1. Method for the manufacture of a blade or blade section for a wind turbine, comprising the following steps:
- providing a mold that can be opened and closed, having an internal cavity with a form corresponding to that of the finished outer surface of a blade or blade section of a wind turbine being manufactured;
- placing into said mold mechanical means for connecting the blade or blade section, when formed, to another mechanical structure;
- loading into said open mold a pre-weighed quantity of a chosen plastic or polymer material, in powder or liquid form;
- closing and rotating said mold, mounted on a respective arm of a rotational molding system, and making the mold rotate around at least one axis;
- heating said rotating mold to a temperature of between 100°C and 450°C, so that said material uniformly reaches all points of the internal cavity of said mold, settling in layers on the inner surfaces of the mold and gradually forming a hollow body with an external form corresponding to that of said blade or blade section of a wind turbine being manufactured, the final thickness of which is pre-determined by the processing time and by the operating temperature reached;
- after a pre-determined time and once the material being processed has layered, subjecting the mold to cooling, while said mold rotation continues to prevent deformations of said hollow body;
- opening the mold, upon completion of the cooling process, in a work station for extracting said hollow body from the mold in a single piece, which has the finished external form of said blade or blade section of a wind turbine, and comprises said co-molded mechanical connecting means inseparably integrated with said hollow body.

2. Method for the manufacture of a blade or blade section for a wind turbine according to claim 1, **characterized in that** it comprises a step of introducing pre-determined quantities of expandable polymer and of polymer expanding agent into said mold, thereby producing a corresponding expanded resin, which is deposited on said layered material to form an internal reinforcing lining in said blade or blade section.

3. Method for the manufacture of a blade or blade section for a wind turbine according to claim 2, **characterized in that** said phase of introducing into said mold pre-determined quantities of expandable polymer and of polymer expanding agent occurs during heating of said mold.

4. Method for the manufacture of a blade or blade section for a wind turbine according to claim 2, **characterized in that** said phase of introducing pre-determined quantities of expandable polymer and of polymer expanding agent into said mold is carried out cold, following extraction of said blade or said blade section from said mold and its insertion into a holding counter-mold.

5. Blade (10) or blade section of a wind turbine (T), comprising a hollow blade or blade section body (11) in a single piece, produced by means of the method according to one or more of the claims from 1 to 4, **characterized in that** it comprises mechanical means (12) for connecting to another mechanical structure, inseparably integrated with said hollow body.

6. Blade (10) or blade section of a wind turbine (T) according to claim 5, **characterized in that** said blade (13) or said blade section comprises an internal reinforcing lining (13) in expanded resin.

7. Blade or blade section of a wind turbine according to claim 5 or 6, **characterized in that** it is made of transparent or translucent material, and comprises at least one light source on the inside, or encapsulated in said transparent or translucent material.

8. Blade or blade section of a wind turbine according to one or more of the claims from 5 to 7, **characterized in that** it has an anti-icing surface layer.

9. Blade or blade section of a wind turbine according to one or more of the claims from 5 to 7, **characterized in that** it comprises heat transfer means co-molded with said hollow body and which, when said blade or blade section is in use, distribute heat along said hollow body, so as to prevent the formation of surface ice, or to melt any surface ice that may have formed.

10. Blade or blade section of a wind turbine according to one or more of the claims from 5 to 11, **characterized in that** it comprises electrical/electronic means for measuring at least one physical quantity, co-molded with said hollow body and which, when said blade or blade section is in use, make it possible to monitor changes to said physical quantity, by means of a control system connected thereto.

11. Blade or blade section of a wind turbine according to one or more of the claims from 5 to 12, **characterized in that** it comprises electrical/electronic means of discharging lightning or similar, co-molded with said hollow body and connected to earth, and which, when said blade or blade section is in use, allow an electrical charge to be discharged to earth.
